# EUROPEAN PATENT APPLICATION

(11) **EP 2 701 242 A1**
(43) Date of publication of application: **26.02.2014**
(21) Application number: 12774823.4
(22) Date of filing: 13.04.2012
(51) Int. Cl.: H01R 13/66, H05K 1/18

(54) **STRUCTURE FOR CONNECTING ELEMENT TO CONDUCTIVE MEMBER**

(30) Priority: 18.04.2011 JP 2011092058
(71) Applicant: Iriso Electronics Co., Ltd., Kanagawa 222-0033 (JP); Mtec Corporation, Aichi-gun, Aichi 480-1101 (JP)
(72) Inventor: SUGAYA Yujiro, Yokohama-shi Kanagawa 222-0033 (JP); YAMAGUCHI Tomisaburo, Yokohama-shi Kanagawa 222-0033 (JP); SUZUKI Hitoshi, Yokohama-shi Kanagawa 220-0033 (JP); KATO Mitsuharu, Aichi-gun Aichi 480-1101 (JP)
(74) Representative: TBK
(86) International application number: PCT/JP2012/060115
(87) International publication number: WO 2012/144435

(57) **Abstract**

The present invention is to provide an element connection structure for a conductive member, in which structure an element can be easily connected to the conductive member without use of soldering or adhesive. There is provided an element connection structure for a conductive member, which is configured such that a plurality of first conductive members (1) arranged at intervals in the width direction thereof are held by an insulating holding member (2), such that one end of each of a plurality of elements (3) is brought into conductive contact with each of the first conductive members (1), and such that a second conductive member (4), which is brought into conductive contact with the other end of each of the plurality of first conductive members (1), is mounted to the holding member (2) so that each of the elements (3) is held in conductive contact with the first conductive member (1) and the second conductive member (4). Thereby, each of the elements (3) can be connected to each of the conductive members (1) and to the conductive member (4) without use of soldering or adhesive.

## Description

### Technical Field

The present invention relates to a structure for connecting an element to a conductive member, which structure is used for manufacturing various devices such as, for example, a pressure sensor and a rotary magnetic sensor for automobiles, and in which structure the element connected to the conductive member is insert-molded in resin.

### Background Art

Conventionally, for example, when a pressure sensor for automobiles is manufactured, a resin-molded article, in which a plurality of conductive members serving as terminals are insert-molded, is incorporated in a housing of the sensor, and then a pressure sensing element of the sensor is connected to each of the conductive members. In this case, an element, such as a condenser, is soldered to each of the conductive members in the housing (see, for example, Patent Literature 1). However, a soldering iron cannot be used in the housing made of resin, and hence the element is connected to each of the conductive members with adhesive, such as conductive epoxy. Further, when the element is connected to each of the conductive members with conductive epoxy, the connecting surface is silver-plated to improve the conductive property. However, in the case where silver plating is used, silver migration tends to occur, and hence the circumference of the element needs to be filled with an epoxy resin for sealing.

### Citation List

### Patent Literature

Patent Literature 1: Japanese Patent Publication 2004-128274

### Summary of Invention

### Technical Problem

However, in such a structure, there has been a problem that the productivity is lowered because the connecting work of the element in the housing and the filling work of the epoxy resin for sealing are complicated, and also because the curing of the epoxy resin takes a long time.

The present invention has been made in view of the above described problems. An object of the present invention is to provide an element connection structure for a conductive member, in which structure an element can be easily connected to the conductive member without use of soldering or adhesive.

### Solution to Problem

In order to achieve the above described object, an element connection structure for a conductive member, according to the present invention, is configured such that a first conductive member is held by an insulating holding member, such that one end of an element is brought into conductive contact with the first conductive member, and such that a second conductive member, which is brought into conductive contact with the other end of the element, is mounted to the holding member so that the element is held in conductive contact with the first conductive member and the second conductive member.

Thereby, the element is held in conductive contact with the first conductive member and the second conductive member by mounting the second conductive member to the holding member. Therefore, the element can be connected to each of the first and second conductive members without use of soldering or adhesive.

### Advantageous Effects of Invention

According to the present invention, the element can be connected to each of the first and second conductive members without use of soldering or adhesive, and hence the connection work can be very easily performed. In this case, since the element is not fixed to each of the conductive members, there is also an advantage that, for example, even when heat is conducted from high temperature resin during secondary molding, peeling or cracking of the connecting portion, or breakage of the element is not caused due to the difference in linear expansion coefficient between the element and each of the conductive members.

### Brief Description of Drawings

Figure 1 is a perspective view showing an element connection structure according to a first embodiment of the present invention.
Figure 2 is a side sectional view of the element connection structure.
Figure 3 is an exploded perspective view showing an assembly process of the element connection structure.
Figure 4 is an exploded perspective view showing an assembly process of the element connection structure.
Figure 5 is an exploded perspective view showing a modification of the assembly process of the element connection structure.
Figure 6 is an exploded perspective view showing an assembly process of an element connection structure according to a second embodiment of the present invention.
Figure 7 is a perspective view showing an element connection structure according to a third embodiment of the present invention.
Figure 8 is a side sectional view of the element connection structure.
Figure 9 is an exploded perspective view showing an assembly process of the element connection structure.
Figure 10 is a view showing a configuration example of an electronic circuit of the element connection structure.

### Description of Embodiments

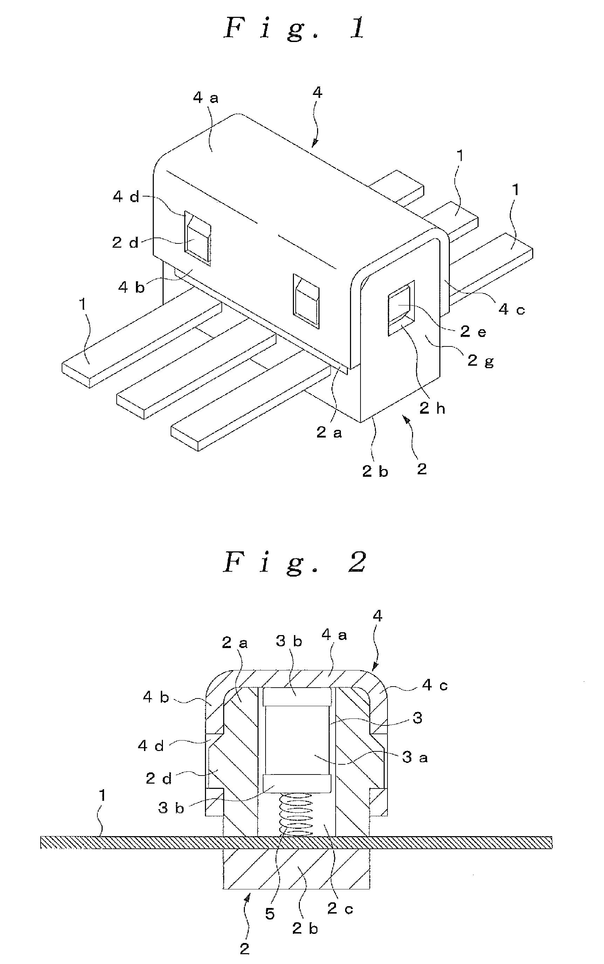

Figure 1 to Figure 4 show a first embodiment according to the present invention. The element connection structure shown in Figure 1 to Figure 4 is used for manufacturing various devices such as, for example, a pressure sensor and a rotary magnetic sensor for automobiles.

The element connection structure of the present embodiment is configured such that a plurality of first conductive members 1 arranged at intervals in the width direction thereof are held by an insulating holding member 2, such that one end of each of a plurality of elements 3 is brought into conductive contact with each of the first conductive member 1, and such that a second conductive member 4, which is brought into conductive contact with the other end of each of the elements 3, is mounted to the holding member 2 so that each of the elements 3 is held in conductive contact with the first conductive member 1 and the second conductive member 4.

Each of the first conductive members 1 is made of a conductive metal extending in a plate shape and is used as a terminal which is connected to the other side connecting portion (not shown).

The holding member 2 is configured by a first divided member 2a and a second divided member 2b which can be connected to each other, and each of the divided members 2a and 2b is a molded article formed of synthetic resin.

The first divided member 2a is formed into a laterally-long rectangular parallelepiped shape so as to be arranged on each of the first conductive members 1. A plurality of component receiving holes 2c as component receiving portions for respectively receiving the elements 3 are provided in the first divided member 2a, and the component receiving hole 2c vertically penetrates the first divided member 2a so that the upper and lower ends of the component receiving hole 2c are respectively opened in the upper and lower surfaces of the first divided member 2a. A pair of first engagement projecting portions 2d, which engage the second conductive member 4, are projectingly provided at an interval in the width direction on each of the front and rear surface of the first divided member 2a. Each of the first engagement projecting portions 2d is formed so that the upper end side surface thereof is inclined. On each of the width direction side surfaces of the first divided member 2a, a second engagement projecting portion 2e, which engages the second divided member 2b, is projectingly provided so that the lower end side surface of each of the second engagement projecting portions 2e is formed to be inclined.

The second divided member 2b is provided, on the upper surface thereof, with a plurality of grooves 2f which respectively engage the first conductive members 1, and is arranged under the first conductive members 1. A side wall portion 2g extending upward is provided at each of both width-direction sides of the second divided member 2b, and an engagement hole 2h, which engages each of the second engagement projecting portions 2e of the first divided member 2a, is provided in each of the side wall portions 2g.

Each of the elements 3 is configured by electronic components such as, for example, a condenser, a resistor, a varistor, and an inductor. The element 3 is configured by a plate-shaped component body 3a formed of a material having prescribed electrical properties, and by a pair of electrodes 3b respectively provided at both width-direction end sides of the component body 3a. Each of the electrodes 3b is formed so as to cover each of both width-direction end portions of the component body 3a.

The second conductive member 4 is made of a conductive metal plate, so as to cover the upper, front and rear surfaces of the holding member 2. The second conductive member 4 is configured by an upper wall portion 4a, a front wall portion 4b, and a rear wall portion 4c. A pair of engagement holes 4d, which respectively engage the first engagement projecting portions 2d of the first divided member 2a, are provided in each of the front wall portion 4b and the rear wall portion 4c.

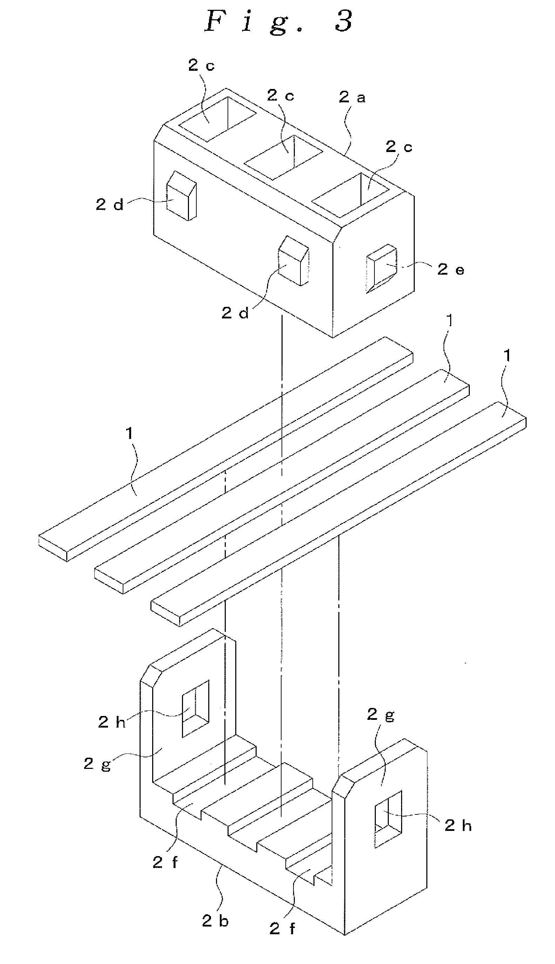

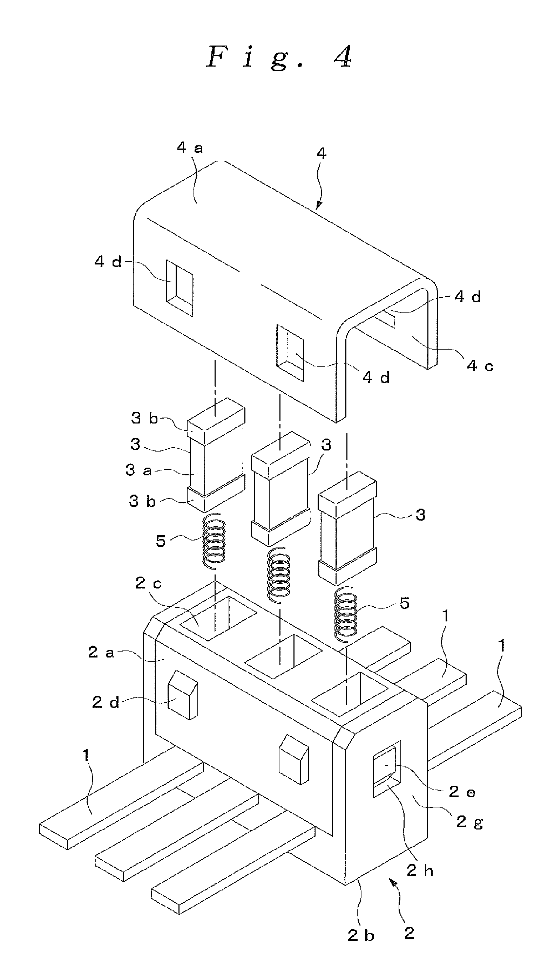

In the present embodiment, as shown in Figure 3, each of the conductive members 1 is arranged between the first divided member 2a and the second divided member 2b of the holding member 2. The first divided member 2a and the second divided member 2b are made to engage each other, and thereby each of the conductive members 1 is held by the holding member 2. At this time, when each of the first conductive members 1 is made to engage each of the grooves of the second divided member 2b, and when the first divided member 2a is inserted between the side wall portions 2g of the second divided member 2b, each of the side wall portions 2g gets over the second engagement projecting portion 2e of the first divided member 2a while being deformed, so that each of the second engagement projecting portions 2e engages each of the each engagement holes 2h of the second divided member 2b. Next, as shown in Figure 4, the elements 3, each of which is arranged so that the electrodes 3b are respectively located on the upper and lower sides, are respectively inserted into the component receiving holes 2c of the holding member 2 from above. At this time, a coil-shaped spring 5 as a conductive elastic member is provided between the one end (lower electrode 3b) of each of the elements 3 and the first conductive member 1. Subsequently, the second conductive member 4 is mounted to the holding member 2. At this time, when the first divided member 2a of the holding member 2 is inserted between the front wall portion 4b and the rear wall portion 4c of the second conductive member 4, each of the front wall portion 4b and the rear wall portion 4c gets over each pair of the first engagement projecting portions 2d of the first divided member 2a while being deformed, so that the first engagement projecting portions 2d engage the engagement holes 4d of the second conductive member 4, respectively. Thereby, as shown in Figure 2, the second conductive member 4 is brought into contact with the other end (upper electrode 3b) of the element 3 received in each of the component receiving holes 2c. Also, the spring 5 between the element 3 and the first conductive member 1 is compressed, so that, in a state where the upper electrode 3b of each of the elements 3 is brought into press-contact with the second conductive member 4 by the restoring force of the spring 5, the upper electrode 3b of each of the elements 3 is brought into conductive contact with the second conductive member 4, and the lower electrode 3b of each of the elements 3 is brought into conductive contact with each of the first conductive members 1 via the spring 5.

In this way, the present embodiment is configured such that the plurality of first conductive members 1 arranged at intervals in the width direction thereof are held by the insulating holding member 2, such that one end of each of the plurality of elements 3 is brought into conductive contact with each of the first conductive member 1, and such that the second conductive member 4, which is brought into conductive contact with the other end of each of the elements 3, is mounted to the holding member 2 so that each of the elements 3 is held in conductive contact with the first conductive member 1 and the second conductive member 4. Therefore, each of the plurality of elements 3 can be connected to each of the first conductive member 1 and the second conductive member 4 without use of soldering or adhesive, and hence the connection work can be very easily performed. In this case, since each of the elements 3 is not fixed to each of the conductive members 1 and 4, there is also an advantage that, for example, even when heat is conducted from high temperature resin during secondary molding, peeling or cracking of the connecting portion, or breakage of the element 3 is not caused due to the difference in linear expansion coefficient between the element 3 and each of the conductive members 1 and 4.

Further, one end of each of the plurality of elements 3 is brought into conductive contact with each of the first conductive members 1, and also the other end of each of the elements 3 is brought into conductive contact with the second conductive member 4. Thereby, each of the plurality of elements 3 can be simultaneously brought into conductive contact with each of the conductive members 1 and with the conductive member 4, and hence the connection work can be easily performed even when the first conductive members 1 needs to be connected to a plurality of other connecting portions.

Further, since the component receiving portion 2c, which receives therein the element 3, is provided in the holding member 2, the element 3 can be reliably positioned in the holding member 2, and hence the assembling work can be easily performed.

Further, the holding member 2 is formed of the mutually connectable first and second divided members 2a and 2b, each of the first conductive members 1 is arranged between the divided members 2a and 2b, and then the divided members 2a and 2b are connected to each other in such a manner that each of the first conductive members 1 is held by the holding member 2. Thereby, each of the first conductive members 1 and the holding member 2 can be integrated by assembling the components, and hence the productivity can be improved.

Further, the conductive spring 5 is provided in a compressed state between the first conductive member 1 and the element 3. Thereby, each of the elements 3 can be brought into press-contact with each of the conductive members 1 and with the conductive member 4 by the restoring force of the spring 5, so that each of the elements 3 can be reliably brought into conductive contact with each of the conductive members 1 and with the conductive member 4. Note that, instead of the spring 5, it is also possible to use another conductive elastic member such as, for example, a leaf spring, and a block-shaped conductive rubber member.

Further, the holding member 2 and the second conductive member 4 are respectively provided with the first engagement projecting portion 2d and the engagement hole 4d which can be engaged with each other. Thereby, the second conductive member 4 can be mounted to the holding member 2 without use of screws or adhesive, which is very advantageous to increase the efficiency of assembling work.

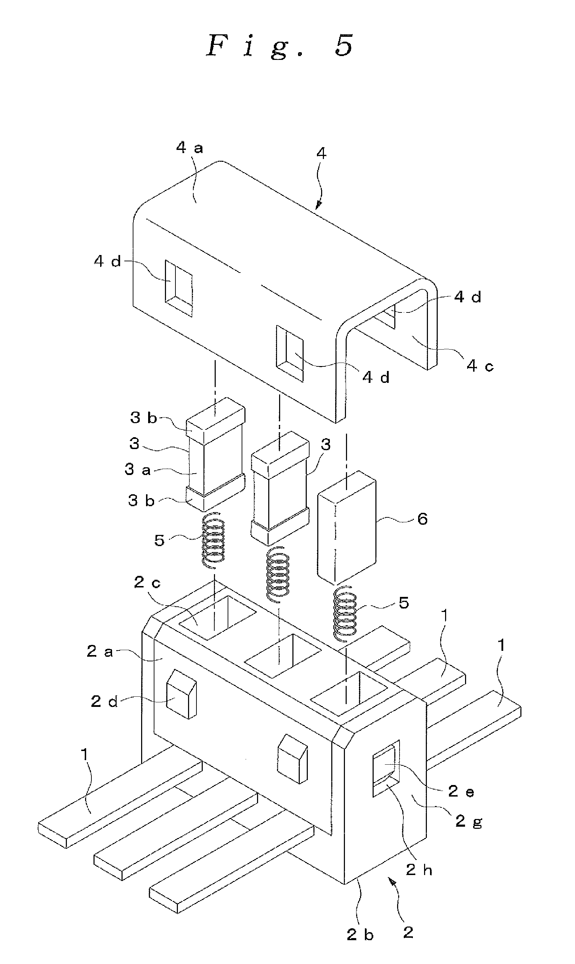

Note that, in the above-described embodiment, a configuration is shown in which an element, having the component body 3a formed of components such as a condenser, a resistor, a varistor, and an inductor, having prescribed electrical properties, is used as each of the elements 3. However, as shown in Figure 5, when an element 6, which as a whole is made of a conductive material, is used as one of the elements so that the first conductive member 1 is short-circuited with the second conductive member 4 by the elements 6, the first conductive member 1 can be used as a grounding electrode.

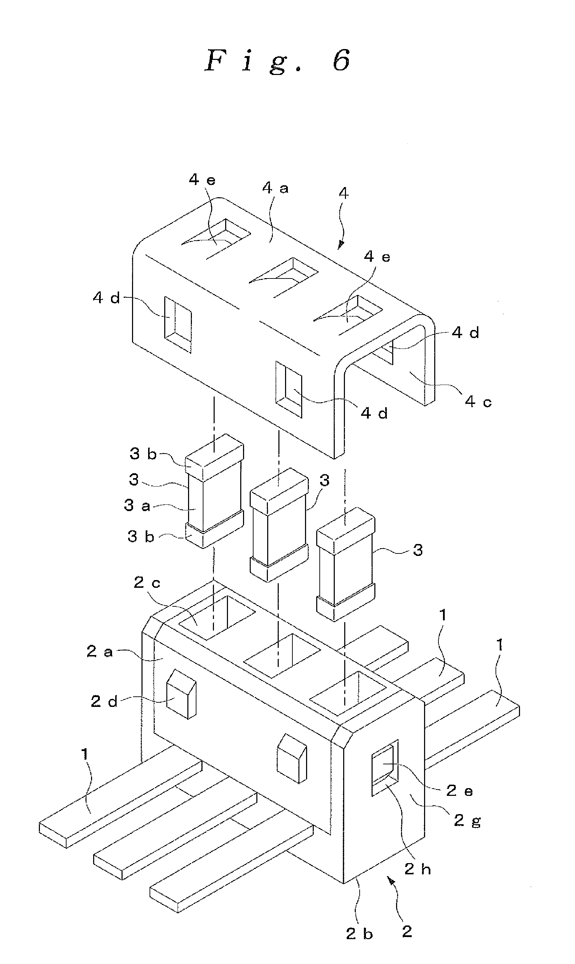

Further, in the above-described first embodiment, a configuration is shown in which the element 3 is brought into press-contact with each of the conductive members 1 and 4 by the spring 5. However, as in a second embodiment shown in Figure 6, the number of components can be reduced when, instead of providing the springs 5, a plurality of elastic piece portions 4e are provided on the upper wall portion 4a of the second conductive member 4, and that each of the elastic piece portions 4e is brought into press-contact with the upper electrode 3b of each of the elements 3. In this case, each of the elastic piece portions 4e is formed in such a manner that a part of the upper wall portion 4a is cut so as to be inclined downward. However, the upper wall portion 4a itself may also be configured to be elastically deformable, for example, by reducing the thickness of the second conductive member 4. Further, a part of the first conductive member 1 may also be formed to be elastically deformable so as to be brought into press-contact with the lower electrode 3b of the element 3.

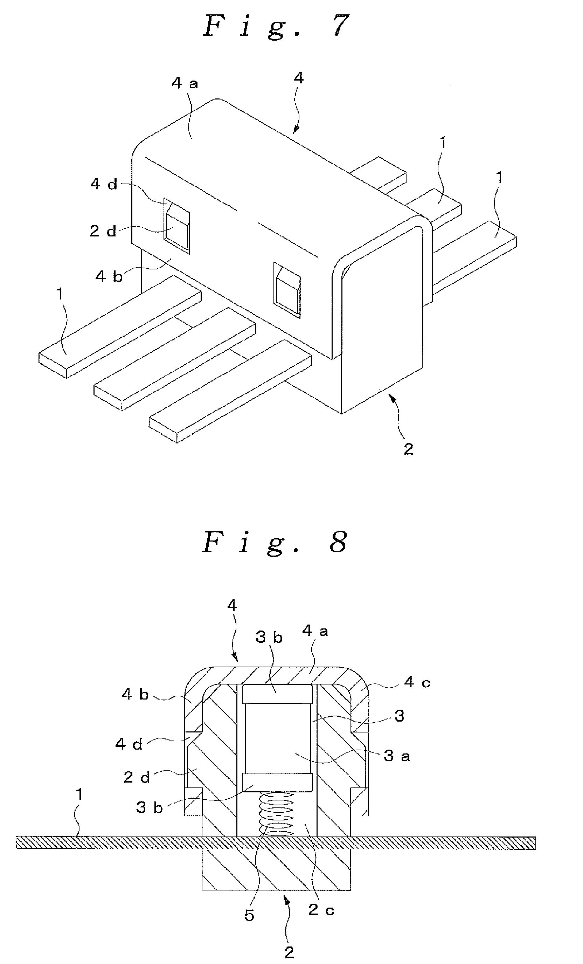

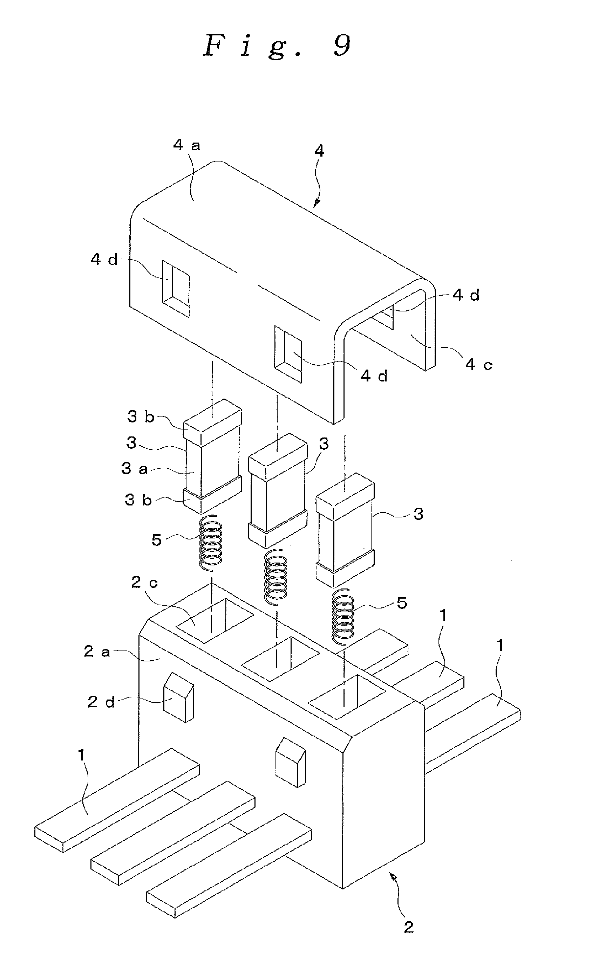

Further, in the above-described first embodiment, a configuration is shown in which the holding member 2 is formed of the first and second divided members 2a and 2b. However, when, as in a third embodiment shown in Figure 7 to Figure 9, the holding member 2 is integrally formed with each of the first conductive members 1 by insert molding of synthetic resin, each of the first conductive members 1 can be integrated with the holding member 2 at the time of molding of the holding member 2, and hence the productivity can be improved. Note that the other configuration of the holding member 2 in the third embodiment is the same as that in the first embodiment except the first and second divided members 2a and 2b.

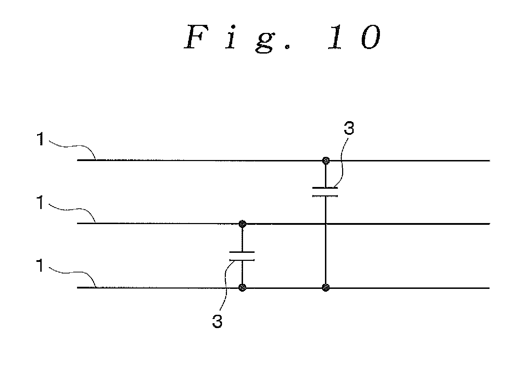

Figure 10 shows a configuration example of an electronic circuit in an element connection structure of the present invention, and shows an equivalent circuit diagram in which, for example, as shown in Figure 5, elements, each formed as a condenser, are used as two of the three elements 3, and also the element 6 made of a conductive material is used as the other one of the elements 3.

Further, in Figure 10, an example is shown in which a condenser is used as the element 3, but as described above, various components, such as a resistor, a varistor, and an inductor, having prescribed electrical properties, can be used other than the condenser. Therefore, various electronic circuits can be configured by using a plurality of kinds of elements.

### Reference Signs List

- 1: First conductive member
- 2: Holding member
- 2c: Component receiving hole
- 3: Element
- 4: Second conductive member
- 4e: Elastic piece portion
- 5: Spring
- 6: Element

## Claims

1. An element connection structure for a conductive member, wherein
a first conductive member is held by an insulating holding member,
one end of an element is brought into conductive contact with the first conductive member, and
a second conductive member, which is brought into conductive contact with the other end of the element, is mounted to the holding member so that the element is held in conductive contact with the first conductive member and the second conductive member.

2. The element connection structure for the conductive member according to claim 1, wherein
the holding member is formed of a plurality of divided members which can be connected to each other, and in a state where the first conductive member is arranged between the divided members, the divided members are connected to each other so that the first conductive member is held by the holding member.

3. The element connection structure for the conductive member according to claim 1, wherein
the holding member is integrally formed with the first conductive member by insert molding of synthetic resin.

4. The element connection structure for the conductive member according to one of claim 1 to claim 3, wherein
a component receiving portion, which receives therein the element, is provided in the holding member.

5. The element connection structure for the conductive member according to one of claim 1 to claim 4, wherein
a conductive elastic member is provided in a compressed state between the element and at least one of the first and second conductive members.

6. The element connection structure for the conductive member according to one of claim 1 to claim 4, wherein
at least one of the first and second conductive members is formed to be elastically deformable so as to be brought into press-contact with the element.

7. The element connection structure for the conductive member according to one of claim 1 to claim 6, wherein
engaging portions, which can be engaged with each other, are provided on the holding member and the second conductive member, respectively.

8. The element connection structure for the conductive member according to one of claim 1 to claim 7, wherein
one end of each of a plurality of the elements is brought into conductive contact with each of a plurality of the first conductive members, and
the other end of each of the plurality of elements is brought into conductive contact with the second conductive member.

9. The element connection structure for the conductive member according to claim 8, wherein
the elements include an element by which the first conductive member is short-circuited with the second conductive member.
